Europäisches Patentamt

(19) European Patent Office

Office européen des brevets

(11) Publication number: **0 436 321 A2**

(12) # EUROPEAN PATENT APPLICATION

(21) Application number: **90313526.7**

(51) Int. Cl.⁵: **G01F 15/18**

(22) Date of filing: **12.12.90**

(30) Priority: **12.12.89 GB 8928006**
**19.04.90 GB 9008843**

(43) Date of publication of application:
**10.07.91 Bulletin 91/28**

(84) Designated Contracting States:
**BE DE FR GB NL**

(71) Applicant: **Evans, Gerald John**
**22 Cambridge Road,Clevedon**
**Bristol BS21 7DN (GB)**

(72) Inventor: **Evans, Gerald John**
**22 Cambridge Road,Clevedon**
**Bristol BS21 7DN (GB)**

(74) Representative: **Calderbank, Thomas Roger et al**
**MEWBURN ELLIS 2 Cursitor Street**
**London EC4A 1BQ (GB)**

(54) **Mounting assembly.**

(57) A mounting assembly for a meter unit (17) and/or stop-cock valve assembly (16) has a pair of one-way valves (40, 41) downstream of the meter unit (17) and/or stop-cock valve assembly (16). The one-way valves (40, 41) are separated by a spacer ring (42) with an opening therein leading to a duct defined by a chamber (44) and a passage (52, 56). The duct is normaly sealed by an end cap 58, but removal of that end cap 58 permits immediate pressure measurement of the fluid (e.g. water) between the two one-way valves (40, 41) which substantially corresponds to the outlet pressure. Furthermore, if the stop-cock valve assembly is operated to seal against a valve seat 20 and so stop incoming fluid flow, then the second one-way valve 41 can be tested by checking for flow from the duct corresponding to a back-flow from the outlet pipe 28 of the mounting assembly.

EP 0 436 321 A2

Fig 1

# MOUNTING ASSEMBLY

The present invention relates to a mounting assembly for mounting a meter and/or a stop-cock. It is particularly, but not exclusively, concerned with arrangements in which that meter unit is for metering the flow of water.

In GB-A-2210465, GB-A-330614, and GB-A-2232181, I discussed various meter mounting assemblies. The present invention seeks to modify and adapt such assemblies.

In the various meter mounting assemblies described in the above applications, there was normally a single check valve (one-way valve) located downstream, in the direction of fluid flow, of the meter unit and/or stop-cock. In a first aspect, the present invention proposes that a pair of one-way valves, both acting in the same direction, are included in the flow way from the meter and/or stop-cock.

Thus, the present invention may provide a meter mounting assembly, comprising a meter support unit, and a meter unit mounted on the meter support unit, the meter support unit having a first flow-way to the meter unit and a second flow-way from the meter unit, so as to define a flow route for fluid through the meter support unit via the meter unit ; wherein the second flow-way has first and second one-way valves therein, the first and second one way valves having the same direction of permitted flow therethrough.

The above statement assumes that a meter is present. There will normally also be a stop-cock in the flow-way to the meter. However, as I mentioned in some of my earlier applications referred to above, it is possible for the meter unit to be replaced with a cap or similar seal, when, for example, it is not necessary to meter the fluid flow. For this reason, the present invention may be used in an arrangement with only a stop-cock, in which case the present invention may then provide a stop-cock mounting assembly comprising a stop-cock support unit having a flow-way therethrough defining a flow route for fluid, and a stop-cock valve part mounted in and movable relative to the support unit between a position in which a part of the stop-cock valve part is seated on a valve seal of the flow-way so as to obstruct the flow route and a withdrawn position in which the flow route is not obstructed ; wherein the flow way has, downstream of the valve seat, first and second one-way valves therein, the first and second one way valves having the same direction of permitted flow therethrough.

A further problem addressed by the present invention is problem of pressure testing down-stream of the meter. This is the most important point for pressure testing for e.g. domestic water supply, because it represents the pressure at which the consumer receives the water, and it is this pressure which is governed by statute. Previously, there has been no method for pressure testing without dismantling the meter mounting assembly.

However, another aspect of the present invention proposes that an outlet be formed in a wall of the flow-way leading from the meter, which outlet communicates with a duct. Then, by testing the pressure in that duct, the pressure of the fluid supply may be determined. Of course, when pressure testing is not required, it will be necessary to seal the duct.

Thus, the present invention may further provide a meter mounting assembly, comprising a meter support unit, and a meter unit mounted on the meter support unit, the meter support unit having a first flow-way to the meter unit and a second flow-way from the meter unit, so as to define a flow route for fluid through the meter support unit via the meter unit ; wherein the second flow-way has an opening in the wall thereof, and there is a duct leading from the opening and extending upwardly.

Again, the above statement assumes that a meter is present but this aspect may be used in arrangement with only a stop-cock, in which case the present invention may provide a stop-cock mounting assembly comprising a stop-cock support unit having a flow-way therethrough defining a flow route for fluid, and a stop-cock valve part mounted in and movable relative to the support unit between a position in which a part of the stop-cock valve part is seated on a valve seat of the flow-way so as to obstruct the flow route and a withdrawn position in which the flow route is not obstructed ; wherein the flow way has downstream of the valve seat an opening in the wall thereof, and there is a duct leading from the opening and extending upwardly.

Preferably, the aspect of the present invention concerned with the use of two one-way valves, and the aspect of the invention concerned with the provision of a duct for pressure testing are used in combination (although they are independent). When they are used in combination, the duct preferably leads from that part of the flow-way between the two one-way valves. When the fluid is supplied to the meter mounting assembly, the supply pressure of the fluid to the consumer may be tested as discussed above. However, the combination of these aspects also permits at least the most down-stream one-way valve to be checked. If the supply of fluid (such as water) to the meter mounting assembly is stopped, for example by sealing a stop-cock up-stream of the two one-way valves, then the flow of fluid to the duct should be stopped. If the two one-way valves are working correctly, fluid cannot flow through the up-stream one-way valve from the supply, because this is sealed by the stop-cock. Furthermore, the down-stream one-way valve should prevent any back-flow from e.g. the consumer.

If, with the supply sealed, there is fluid flow through the duct, then there is a fault in the down-stream one-way valve.

Preferably, where a duct is provided extending from an opening in the wall of the flow-way, that duct comprises a chamber immediately adjacent the opening, and a passage of narrower cross-section extending from that chamber. The chamber then permits pressure surgance to be absorbed before it passes into the passage.

Embodiments of the present invention will now be described in detail, by way of example, with reference to the accompanying drawings, in which :

Fig. 1 shows a sectional view through a first embodiment of the present invention ;

Fig. 2 shows a second view, partially in section, of the first embodiment ;

Fig. 3 shows a further view, again partially in section of the first embodiment ;

Fig. 4 shows a second embodiment of the present invention ;

Fig. 5 shows the second embodiment of the present invention mounted in a casing ;

Fig. 6 shows a third embodiment of the present invention ; and

Fig. 7 shows an alternative view, partially in sections, of the third embodiment.

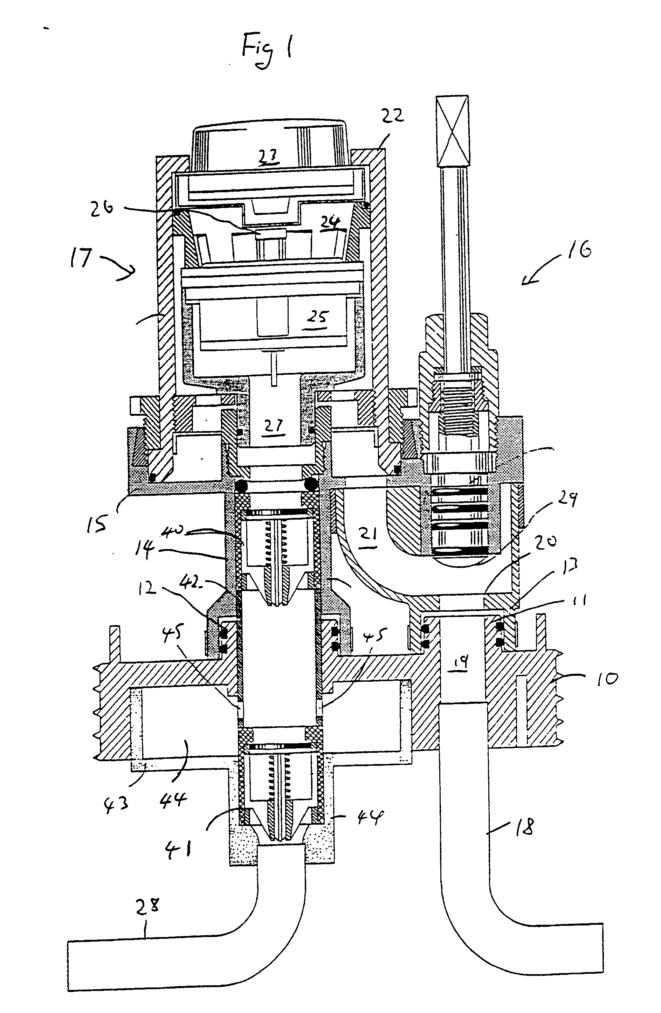

Turning first to Fig. 1, a meter mounting assembly has a base plate 10 having upwardly extending spiggots 11, 12 which engage telescopically with downwardly extending parts 13, 14 of a meter support plate 15. The meter support plate 15 contains a stop-cock valve assembly generally indicated at 16, and a meter unit generally indicated at 17. An inlet pipe 18 leads to a duct 19 in the base 10, which passes a valve seat 20 and through a further duct 21 into the meter support plate 15, and hence into the interior of the meter unit, passing between the outer casing 22 of the meter unit 17, and the inner components which comprise a display component 23, a ring component 24 with apertures therein to allow fluid such as water to pass therethrough, a turbine or piston component 25 and a magnetic drive 26 driven by the turbine or piston component 25 which in turn drives the meter display component 23. The outlet 27 of the meter unit leads to the downwardly extending part 14 of the meter support plate 15, and from thence through the base 10 to an outlet pipe 28.

In normal operation, the components are arranged as shown in Fig. 1 so that a flow-way for fluid, such as water, exists through the inlet 18, the ducts 19 and 21, the meter unit 17 and the outlet pipe 28. That flow-way may be sealed by movement of the stop-cock valve assembly 16 so that its lower part 29 seats against the valve seat 20. The structure thus described is generally similar to arrangements discussed in GB-A-2230614, and reader is referred to that specification for further details of the structure which will not be discussed in detail now.

In GB-A-2230614, the flow-way leading from the meter unit has a single one-way valve therein. As can be seen in Fig. 1, the embodiment of the invention shown in Fig. 1 has a first one-way valve 40 and a second one-way valve 41 between the outlet 27 of the meter unit 17 and the outlet pipe 28. The first one-way valve 40 is located in the downwardly extending part 14 of the meter support plate 15, and is spaced from the second one-way valve 41 by a spacer ring 42. The purpose of this spacer ring 42 is to reduce fluid turbulance at the second one-way valve 41. After the fluid has passed through the first one-way valve 40, it will be turbulant but its flow will become increasingly smooth as it moves away from that one-way valve 40. If the spacer ring 42 is sufficiently long, bearing in mind the constraints of the overall size of the meter mounting assembly, the flow which reaches the second one-way valve 41 may be relatively smooth.

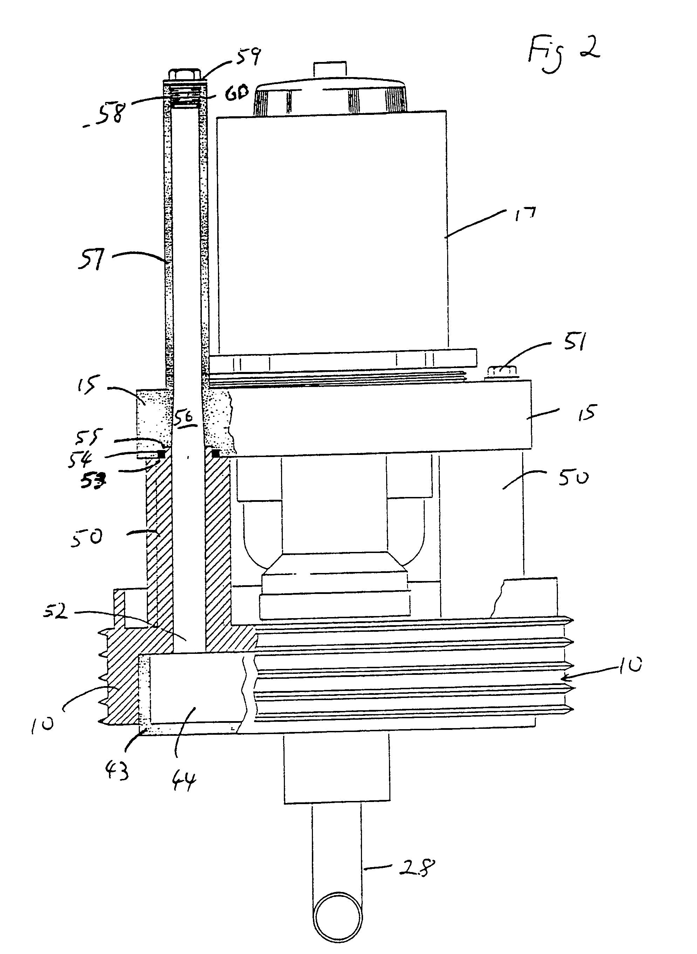

As can be seen, the base 10 has a lower plate 43 which is sealed to the rest of the base 10, and has a downwardly extending part 44 which contains the second one-way valve. The use of this plate 43 permits a chamber 44 to be formed within the base 10. This chamber 44 communicates with the interior of the spacer ring 42, and hence with the fluid flowing between the first and second one-way valves 40, 41, due to openings 45 in the spacer ring 42. The purpose of the chamber 44 will now be described, with reference to Fig. 2.

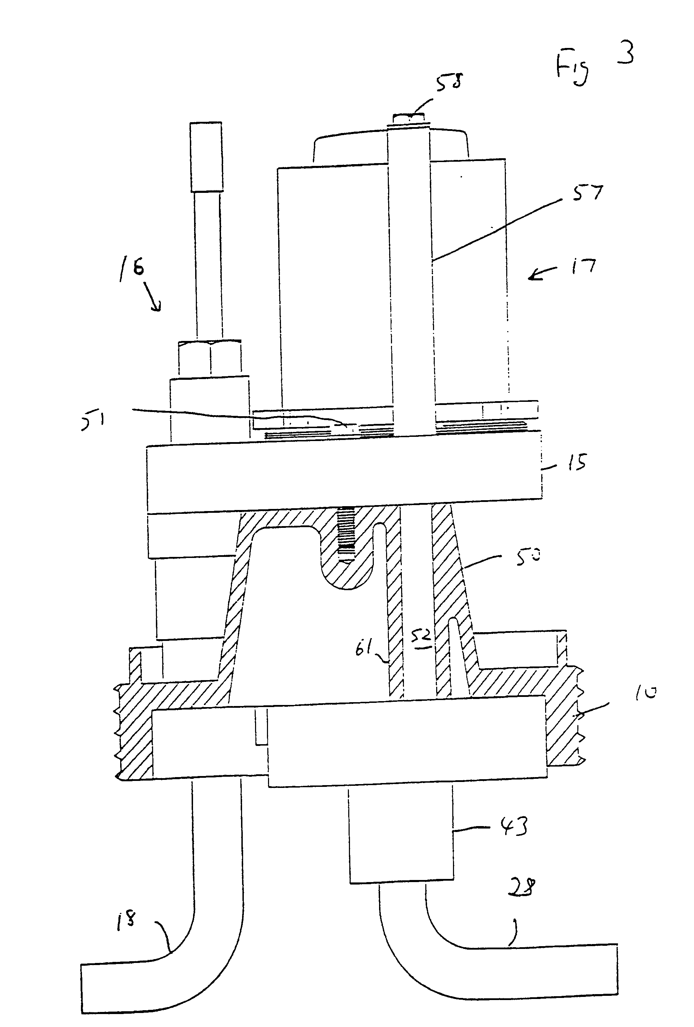

In GB-A-2210465, I described how the base and meter mounting plate of a meter mounting assembly could be joined by upstanding pillars. Thus, in this embodiment of the present invention, the base 10 and the meter mounting plate 15 are joined by pillars 50, and a bolt 51 extends through the meter mounting plate 15 and engages with the pillar 50. This engagement is shown more clearly in Fig. 3.

In the embodiment of the present invention shown in Fig. 2, one of the pillars 50 is located directly above the chamber 44, and has a bore 52 extending therethrough and communication with the chamber 44. The top 53 of that pillar is then sealed via an O-ring 54 to a seat 55 in the meter support plate 15, and the meter support 15 has a bore 56 extending therethough, which bore 56 is extended by a tubular extension 57 from the meter support plate 15. Thus, the bores 52 and 56 define a passage from the chamber 44.

As shown in Fig. 2, the free-end of the extension 57 is sealed by an end-cap 58 with screw threads 59 engaging corresponding screw threads 60 in the end of the extension 57. In this state, and assuming the stop-cock valve assembly 16 is positioned so that its end 29 is clear of the valve seat 20, fluid will flow through the first one-way valve 40 into the interior of the spacer ring 42, and through the opening 45 into the chamber 44 and hence into the passage defined by ducts 52, 56. The end cap 58 will prevent that fluid escaping. Once the chamber 44 and the passage are filled, fluid will then pass through the second one-way valve 41. However, if the end cap 58 is removed, the pressure of the fluid at the free end of the extension 57 then gives a direct measurement of the pressure of the fluid between the two one-way valves 40, 41, thus enabling the supply pressure of the fluid to be determined. It can be appreciated that, in an arrangement such as shown in Fig. 1, most of the pressure drop will be within the meter unit 17 itself.

As was mentioned above, Fig. 3 shows the attachment of the valve support plate 15 to the pillars 50. Fig. 3 also shows that the duct 52 may be formed by a tubular section 61 within the pillar 50, rather than using a wholly solid pillar 50. Of course, a solid pillar can be used if desired.

However, the arrangement shown in Figs. 1 to 3 also permits a test to be made on the second one-way valve 41. If the stop-cock valve assembly 16 is operated so that its end 29 seats against the valve seat 20, then no fluid can pass through the meter unit 17, and thus there should be no fluid flow into the interior of the spacer ring 42. In this state, the second one-way valve 41 should prevent back-flow through the outlet pipe 28 towards the meter unit 17. In a domestic water supply, such back-flow must be prevented to prevent contamination. If, however, the second one-way valve 41 is faulty, then fluid (such as water when the assembly is used for domestic water supply) will pass through the outlet duct and, via the opening 45, into the chamber 44 and hence through the passage defined by ducts 52, 56.

Thus, if the inlet supply is sealed by operation of the stop-cock valve assembly 16, and the end cap 58 of the extension 57 is removed, then any fluid flow out of the extension 57 (other than a small amount to equalise pressure) it will indicate that there is a fault in the second one-way valve 41. Thus. this embodiment of the present invention permits immediate and simple testing of at least the second one-way valve 41. Thus, it is possible to establish with confidence that back-flow from the consumer to the meter, and hence to the mains cannot occur.

As shown in Figs. 1 and 2, the passage formed by ducts 52 and 56 have a narrower cross-section than the chamber 44. The reason for this is that the chamber 44 may then absorb turbulence and/or pressure surges, without significantly affecting the fluid in the passage.

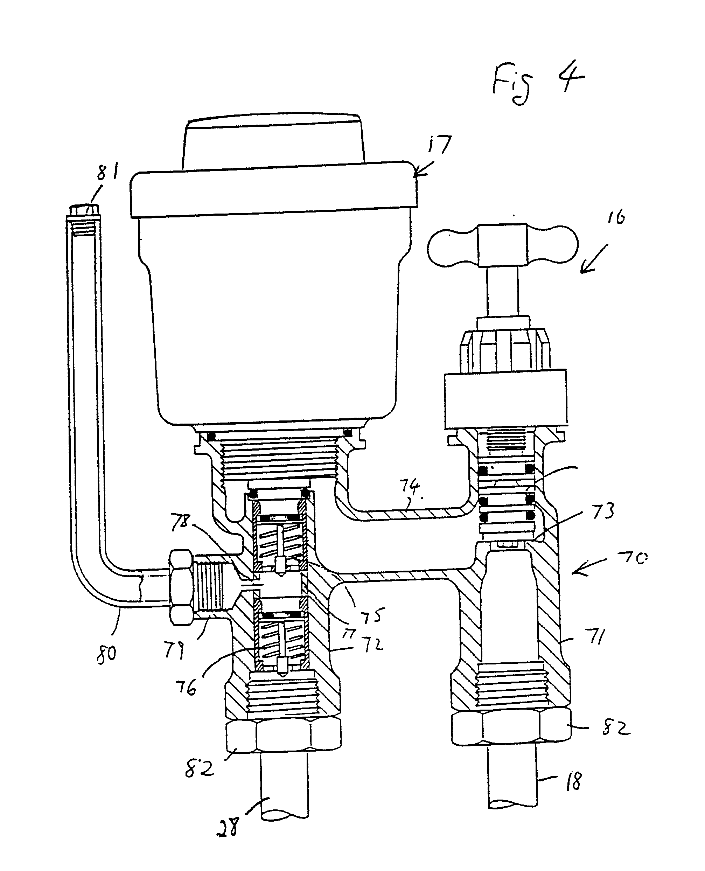

Fig. 4 shows a second embodiment of the present invention. As in the embodiments of Figs. 1 to 3, the meter mounting assembly has a stop-cock valve assembly 16 and a meter unit 17, but in this second embodiment, these components are supported by a H-shaped support unit 70. The support unit 70 may be of metal, whereas the base 10 and meter support plate 15 of the embodiment of Figs. 1 to 3 will normally be of plastics.

As shown in Fig. 4, one leg 71 of the H-shaped support unit 70 is connected to the inlet pipe 18, and the other leg 72 is connected to the outlet pipe 28. The upward continuation of the leg 71 contains the stop-cock valve assembly 16, and again there is a valve seat 73 on which the lower part of the valve assembly 60 may be positioned, if desired, to seal the flow. The cross-piece 74 defines part of the flow-way between the valve seat 73 and the meter unit 17. The meter unit 17 is fitted, by means of a screw attachment, to the upward extension of the leg 72 and the interior of that leg 72 defines a duct containing first and second one-way valves 75, 76. As in the previous embodiment, these one-way valves 75, 76 are separated by a spacer plate 77 having an opening 78 therein which communicates with the interior of an extension 79 in the H-shaped support unit 70, to which extension 79 is attached to a tube 80 which defines a passage from the chamber within the extension 79. This tube 80 is normally sealed by an end cap 81 but that end cap 81 may be removed for pressure testing as was described above. Thus, the second one-way valve 76 may be checked by sealing the in coming fluid flow by bringing the lower part of the stop-cock valve assembly 16 against the valve seat 73, then removing the end cap 81 of the tube 80 to see if there is fluid flow therethrough. If there is such a flow, there is a fault in the second one-way valve 76.

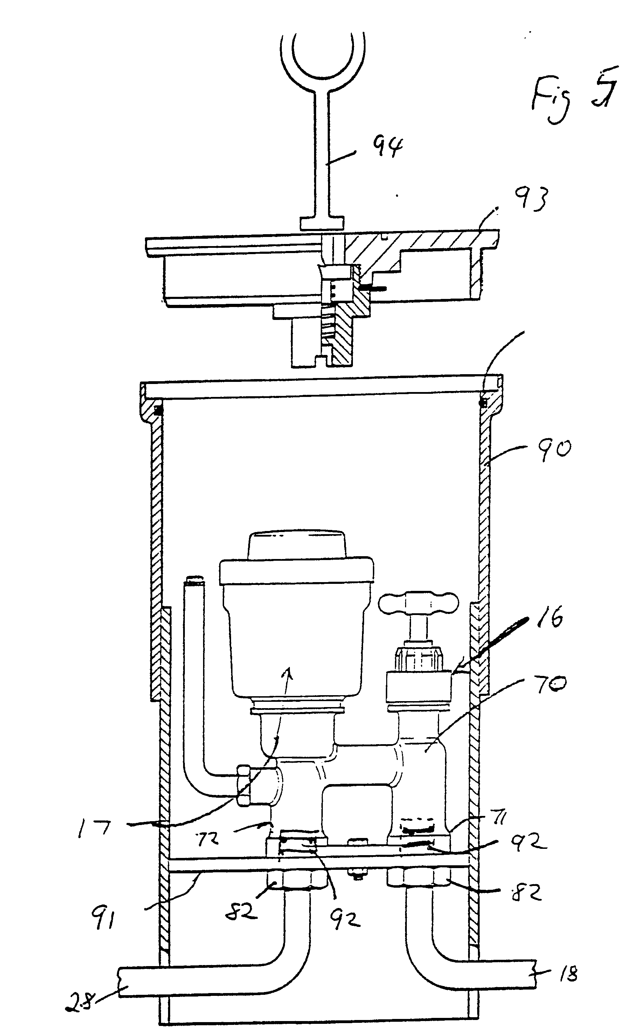

As shown in Fig. 4, nuts 82 hold the inlet and outlet pipes 18, 28 to the legs 71, 72 of the support unit 70. As shown in Fig. 5, these nuts 82 may be used to mount the meter mounting assembly within a housing 90, by providing a plate 91 within that housing, which plate 91 is secured between the ends of the legs 71, 72 and the nuts 82. Fig. 5 also shows seals 92 which may be provided immediately adjacent the attachment to the inlet pipe 18 and outlet pipe 28, and also that the housing 19 may have a lid 93 which is attachable to the upper end thereof via a key 94.

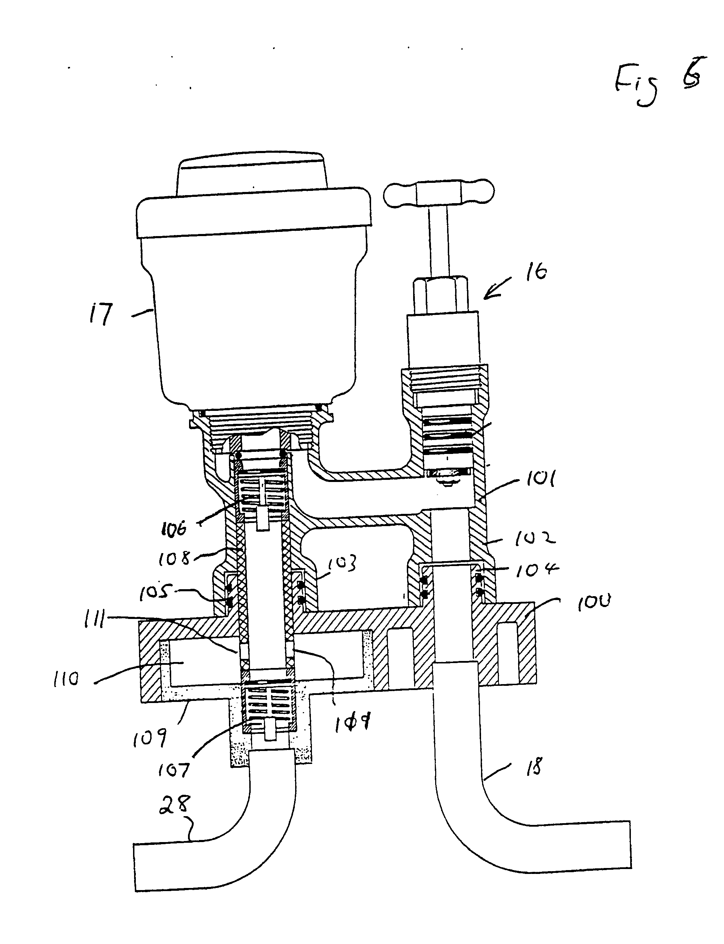

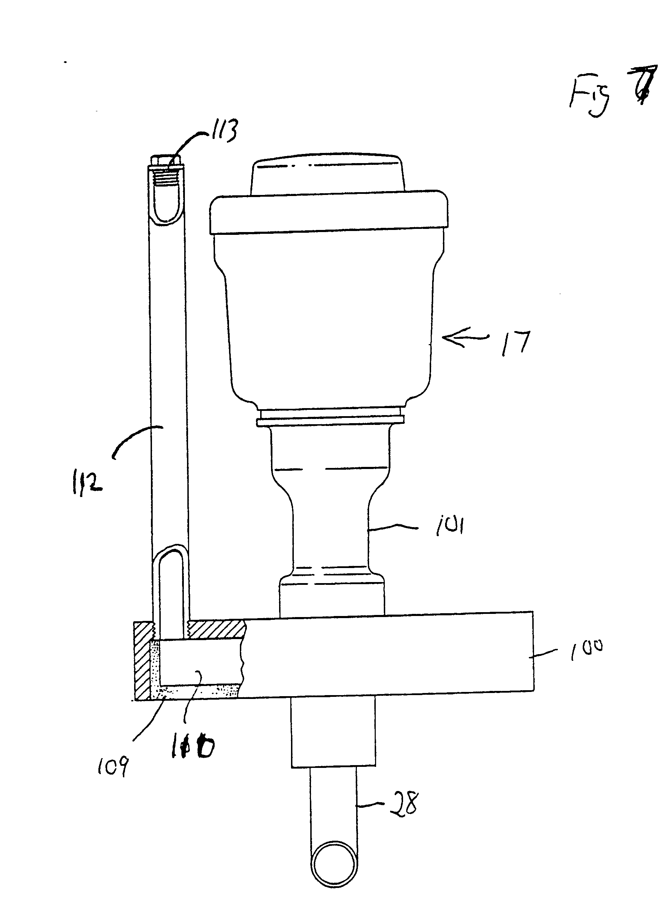

The third embodiment of the present invention, shown in Fig. 6 and 7, represents a combination of the first and second embodiments. The meter mounting assembly has a base 100, with an inlet pipe 18 leading thereto and an outlet pipe 28 leading therefrom. However, instead of using a meter support plate attached to the base by upstanding pillars, as in the first embodiment, the stop-cock valve assembly 16 and the meter unit 17 are supported by a H-shaped part 101, whose downwardly extending legs 102, 103 engage telescopically with upwardly extending lugs 104, 105 of the meter support plate 100. Again, there is a first one-way valve 106 in the flow path from the meter unit 17 and a second one-way valve 107 in the base 100, and separated from the first one-way valve 106 by a spacer ring 108. The spacer ring 108 thus extends within one of the legs 103 of the part 101, whilst the second one-way valve 107 is mounted in a plate 109 similar to the plate 43 in Fig. 1. Thus, again, a chamber 110 is defined within the base which communicates with the interior of the spacer plate 108 via openings 111.

Fig. 7 then shows that the chamber 110 communicates with a tube 112 extending upwardly, and the end of which is sealed by an end cap 113. As in previous embodiments, the tube 112 extends upwardly from the base 100 to a height approximately level with the top of the meter unit 17. Again, by removal of the end cap 113, the pressure between the first and second one-way valve 106, 107 can be checked. Furthermore, the second one-way valve 107 can be tested in a manner similar to that previously described for the other embodiments, by sealing the fluid supply to the meter unit 17 by means of the stop-cock valve assembly 16, removing the end cap 113, and determining if there is fluid flow out of the tube 112, corresponding to a back-flow through the second one-way valve 102.

Thus, the present invention provides a pair of one-way valves in a mounting assembly for a meter and/or stop-cock, and an arrangement for testing the pressure down-stream of the meter and/or stop-cock. The pressure testing arrangement also permits the second one-way valve to be checked.

## Claims

1. A meter mounting assembly, comprising a meter support unit (10, 15, 50), and a meter unit (17) mounted on the meter support unit (10, 15, 50), the meter support unit (10, 15, 50) having a first flow-way (18, 19, 21) to the meter unit (17) and a second flow-way (27, 28) from the meter unit (17), so as to define a flow route for fluid through the meter support unit (10, 15, 50) via the meter unit (17) ;
   characterised in that :
   the second flow-way (27, 28) has first and second one-way valves (40, 41) therein, the first and second one way valves (40, 41) having the same direction of permitted flow therethrough.

2. A stop-cock mounting assembly comprising a stop-cock support unit (10, 15, 50) having a flow-way (18, 19, 21, 28) therethrough defining a flow route for fluid, and a stop-cock valve part (16) mounted in and movable relative to the support unit (10, 15, 50) between a position in which a part (29) of the stop-cock valve part (16) is seated on a valve seat (20) of the flow-way so as to obstruct the flow route and a withdrawn position in which the flow route is not obstructed ;
   characterised in that :
   the flow way has, downstream of the valve seat (20), first and second one-way valves (40, 41) therein, the first and second one-way valves (40, 41) having the same direction of permitted flow therethrough.

3. A meter mounting assembly according to claim 1 or claim 2, wherein the flow route has an opening (45) in the wall thereof between the first and second one-way valves (40, 41), and there is a duct (44, 56) leading from said opening (45).

4. A meter mounting assembly, comprising a meter support unit (10, 15, 50), and a meter unit (17) mounted on the meter support unit (10, 15, 50), the meter support unit (10, 15, 50) having a first flow-way (18, 19, 21) to the meter unit (17) and a second flow-way (27, 28) from the meter unit (17), so as to define a flow route for fluid through the meter support unit (10, 15, 50) via the meter unit (17) ;
   characterised in that :
   the second flow-way has an opening (45) in the wall thereof, and there is a duct (44, 56) leading from the opening (45) and extending upwardly.

5. A stop-cock mounting assembly comprising a stop-cock support unit (10, 15, 50) having a flow-way (18, 19, 21, 28) therethrough defining a flow route for fluid, and a stop-cock valve part (16) mounted in and movable relative to the support unit (10, 15, 50) between a position in which a part (16) of the stop-cock valve part is seated on a valve seat (20) of the flow-way so as to obstruct the flow route and a withdrawn position in which the flow route is not obstructed ;
   characterised in that :
   the flow way has, downstream of the valve seat (20), an opening (45) in the wall thereof, and there is a duct (44, 56) leading from the opening (45) and extending upwardly.

6. A meter mounting assembly according to any one of claims 3 to 5 wherein the duct (44, 56) includes a chamber (44) immediately communicating with the opening and a passage (56) of narrower cross-section extending from the chamber (44).

7. A meter mounting assembly according to any one of claims 3 to 7 wherein the meter support unit (10, 15, 50) includes a base (10) and a meter support plate (15) supporting the meter unit (17), the base (10) and the meter support plate (15) being joined by at least one upstanding pillar (50), and the duct (44, 56) extends from the base (10) to the meter support plate (15) through said at least one pillar (50).

8. A meter mounting assembly according to claim 7, wherein the duct (44, 56) extends clear of the meter support plate (15) to a height approximately equal to the height of the meter unit (17) above the meter support plate (15).

9. A meter mounting assembly according to claim 7 or claim 8 as dependent on claim 1 or claim 2 wherein the first one-way valve (40) is located in a part of the flow-route between the meter support plate (15) and the base (10), and the second one-way valve (41) is located within the base (10).

Fig 1

Fig 2

Fig 3

Fig 4

Fig 5

Fig 6

Fig 7